# EUROPEAN PATENT APPLICATION

(11) **EP 3 144 342 A1**
(43) Date of publication of application: **22.03.2017**
(21) Application number: 15185666.3
(22) Date of filing: 17.09.2015
(51) Int. Cl.: C08J 5/00, C08J 7/00, C09D 133/18

(54) **DEVICE FOR THE APPLICATION OF A PRIMER**

(71) Applicant: Henkel AG & Co. KGaA, 40589 Düsseldorf (DE); Henkel IP & Holding GmbH, 40589 Düsseldorf (DE)
(72) Inventor: MISIAK, Hanns, 42781 Haan (DE); LAMBERT, Robert J., Dublin (IE); BARNES, Rory Brian, Dublin (IE); Rushe, Peter, 40589 Düsseldorf (DE)

(57) **Abstract**

A device for priming a substrate surface, said device comprising: i) a source for a primer component in gaseous form; ii) a chamber for holding the gaseous form of the primer component; and at least one of iii) a) a dispensing arrangement for dispensing the gaseous form of the primer component from the chamber onto the substrate surface to be primed, said dispensing arrangement comprising a conduit connecting the chamber and the dispensing outlet, and b) a product pathway for allowing introduction of the substrate to be primed into the chamber so as to prime the surface by contact with the gaseous form of the primer component held within the chamber. The source of the primer component may preferably be solvent-free and / or non-flammable. The device finds important utility in the priming of non-polar or highly crystalline substrates for subsequent bonding using curable adhesive compositions and, in particular, cyanoacrylate adhesive compositions.

## Description

### Field of the Invention

The present invention is directed to a device for the application of a primer or adhesion promoter to a substrate. More particularly, the invention is directed to a device for applying a primer which can promote the bonding of non-polar or highly crystalline substrates with adhesives and, especially, with cyanoacrylate adhesives.

### Background to the Invention

Materials that do not bond satisfactorily with adhesive alone are often referred to as "difficult-to-bond". Such materials are widely recognised and include non-polar or highly crystalline substrates. Exemplary "difficult-to-bond", non-polar substrates include: Polyolefins, for example linear homo- or copolymers of simple olefins, such as polyethylene, polypropylene, polybutene, polymethylpentene, and polytetrafluoroethylene; polyacetals; plasticised PVC (polyvinyl chloride); some polyurethanes; some polyamides; EPDM (ethylene-propylene/diene terpolymer) rubber; thermoplastic rubbers based on vulcanised polyolefins; and, the like. Such substrates often have a waxy, paraffin-like surface character, with a low critical surface tension of wetting and may possess a weak boundary layer at their surface. There is an absence or insufficiency of polar groups on the substrate surface, which groups are necessary to raise the surface energy to the level needed to give satisfactory adhesion with conventional adhesives.

Historically, various surface treatments have been used to improve adhesion of such difficult-to-bond substrates. These treatments include: corona discharge (J.C. Von der Heide & H.L. Wilson, Modern Plastics 38 9 (1961) p199); flame treatment (E.F. Buchel. British Plastics 37 (1964) p142); irradiation with UV light (Practising Polymer Surface Chemistry. D. Dwight. Chemtech (March 1982) p166); surface abrasion; and, plasma treatment. All the above treatments are effective to some degree and are generally thought to work by introducing polar groups onto the surface of non-polar substrates. However, such treatments are also characterized by a requirement for specialized apparatus and / or the use of corrosive or otherwise hazardous materials. In addition, the efficacy of certain of these surface treatments - such as the corona treatment - diminishes over time, meaning that the treatment might need to be repeated after a couple of days or weeks.

Of course, primers have also long been used to promote the bonding of substrates which otherwise are not readily bonded together to a satisfactory extent by adhesive alone. The primer - or "adhesion promoter" - is applied to the surfaces to be bonded to "activate" or "prime" the surface for reception of a later applied adhesive.

DE 3601518-A and EP 0 129 069 A2 both disclose primers comprising at least one organometallic compound and which are useful in bonding non-polar substrates. JP-A- 61023630 similarly proposes organometallic primers for joining plastic models. Each of these documents discloses the use of organo-metallic compounds which are potentially highly toxic materials.

EP 187171 A discloses a primer for polyolefin substrates which comprises: (i) modified or grafted polyolefins such as chlorinated polyolefins, ethylene/vinyl copolymer or ethylene/propylene terpolymer; (ii) a crosslinkable binder; and, (iii) crosslinking agents. It is considered that the primer described therein is somewhat inconvenient to use and apply on account of its rubbery consistency. Furthermore, heating may be needed to activate the primer on the substrate surface and the carrier solvents of the primer- such as toluene and 1,1,1-trichloroethylene - have an undesirable toxicity.

Japanese Application No. 60157940 discloses a primer composition based on a solution of 4-vinyl pyridine as an essential ingredient, and 3,4-lutidine as an optional ingredient, for bonding polyolefins. polyacetal, polyamide, polyester, boron-polymer silicone or PVC. The disclosed primer has a strong, undesirable odour.

The application of a primer composition which comprises a primer component in a solvent - such as those primers of the two documents immediately mentioned above - is typically performed by way of a brush or some such other applicator. The primer composition is applied as a layer or coating on the substrate surface and allowed to dry for a period of time before bonding with adhesive is attempted. In this respect, and at least for adhesion-promotion primers, the solvent is normally a volatile one which evaporates readily at room temperature to leave behind the primer component. The solvent does not therefore interfere with the adhesion process, acting only as an inert carrier solvent for emplacing the adhesion-promoting primer component on the substrate.

For cure-promoting primers, the solvent may be a polymerizable monomer or oligomer which may take part in the polymerization process during bonding. Accordingly these solvents are not usually considered "inert carriers" in the sense that they participate in the subsequent bonding process.

In relying on solvents as carriers and, optionally also reactant monomers, primers are often characterized by a high volatile organic compound (VOC) content. From an environmental standpoint, it is conversely desirable to have a low or substantially zero VOC content. Further disadvantages of the solvent content of primer compositions include but are not limited to: i) problematically long dry-off-times between primer application and adhesive application; ii) corrosion or softening of substrates, in particular of plastics, caused by the solvent; iii) contamination of skin and clothes caused by spillage during handling of liquid primer formulations; iv) difficulties in the neat application of primer compositions in an upward direction, against gravity; and, v) the strong, often overpowering smell of many solvents.

It is known that cyanoacrylate adhesives have exhibited high bond strengths on difficult-to-bond substrates which have undergone the aforementioned surface treatment, these substrates including low density polyethylene (LDPE), high density polyethylene (HDPE), polypropylene (PP), acetal homopolymers, fluoropolymers and thermoplastic vulcanizates (TPV). Cyanoacrylate adhesives are polar, linear molecules that undergo an anionic polymerization reaction. A weak base triggers the reaction causing the linear chains to form.

As such, cyanoacrylate adhesives generally harden after only a few seconds, after which the joined parts exhibit at least a certain degree of initial strength. However, it may happen that such adhesives are applied in a relatively thick layer (>0.1 mm thickness) to substrates and consequently drops or beads of adhesive can protrude from between the parts or substrates to be joined. Rapid hardening throughout the adhesive may rarely be achieved, i.e. cure-through-gap or cure-through-volume (CTV) performance may be unsatisfactory.

It will thus be recognized that primers can have a particular utility in accelerating the polymerization of cyanoacrylate adhesive compositions. However, heretofore, such primers have been solvent borne and therefore suffer from the aforementioned problems.

### Statement of the Invention

In accordance with a first aspect of the invention there is provided a device for priming a substrate surface, said device comprising:
i) a source for a primer component in gaseous form;
ii) a chamber for holding the gaseous form of the primer component; and at least one of
iii)
   a) a dispensing arrangement for dispensing the gaseous form of the primer component from the chamber onto the substrate surface to be primed, said dispensing arrangement comprising a conduit connecting the chamber and the dispensing outlet, and
   b) a product pathway for allowing introduction of the substrate to be primed into the chamber so as to prime the surface by contact with the gaseous form of the primer component held within the chamber.

The primer component consists of one or more compounds which are to be applied to and retained on the substrate surface prior to the application of an adhesive or other coating composition thereto. In the device of the present invention, the source of this component will generally be a volatile solid or liquid such that the gaseous form of the primer component is in equilibrium with another phase of the component. As such, the primer component should have a boiling point less than 350 °C (at 1 atm pressure) and should preferably be characterized by a vapour pressure of at least 0.1 mBar at 25°C.

In a preferred embodiment, the source of the primer component is solvent-free; the absence of volatile organic solvents means that the chamber of the device will not contain the gas phase of such solvents in equilibrium with the liquid phase thereof. In a particularly preferred embodiment, the source of the primer component is also non-flammable;

In an embodiment with particular applicability to the bonding of non-polar, or highly crystalline substrates using cyanoacrylate adhesive compositions, the primer component may include basic compounds such as primary, secondary and tertiary aliphatic amines, or organic bases. Exemplary compounds include those basic materials of the formulae:

R-N=C(R₃)-N(R₁)R₂

and,

R-N=N-N(R₁)R₂

wherein each of R, R₁, R₂ and R₃ may be the same or different and represents an organic group. For example, each R may independently be a substituted or un-substituted, branched or linear aliphatic hydrocarbon of up to 12 carbon atoms. Two R groups, in particular where two R groups are on the same nitrogen atom may together form a monocyclic or bicyclic group. The R groups may also be interrupted by heteroatoms.

In this embodiment, good results have, in particular, been obtained where the primer component comprises a compound selected from the group consisting of: 1,2,3-triazole; 1,5-diazabicyclo[4.3.0]non-5-ene ("DBN"); 1,8-diazabicyclo[5.4.0]undec-7-ene ("DBU"); 7-methyl-1,5,7-triazabicyclo[4.4.0]dec-5-ene; N-t-butyl-N,N-dimethylformamidine; and, *N,N,N',N'-*tetramethylethylenediamine.

As noted above, the source of the primer component may be provided in the solid state in the device. The source can thereby include solid primer components which sublimate. In any event, the solid source may be provided in particulate form. Alternatively, the source of the primer component may be volatile solid which is cast in a predetermined shape, which shape preferably conforms at least partially to the shape of the chamber of the device; the source of the primer component might, for example, be shaped to follow an inner wall of the chamber of the device. In this instance, the solid may be attached to that inner wall through being melted or glued thereon.

The source of the primer component may equally be provided in the liquid state in the device. Whilst that liquid may simply be disposed within the chamber of the device, it is more desirable that the liquid source is retained in a form which is not easily spilled. This may be achieved by a liquid source which is absorbed and/ or adsorbed onto a suitable solid retainer.

Suitable retainer materials may be natural or artificial, particulate or blocky, but are preferably open structured or porous materials capable of retaining the source liquid by both adsorption and absorption. The retainer materials should also be inert towards the primer component. As exemplary retainer materials, the following might be mentioned: Paper; sponges; silicates; sand; gravel; alumina; vermiculite; pumice; wood; non-woven fibers; Raschig rings; glass and plastic beads; and, combinations thereof.

Where the source of the primer component comprises particles - that is either particles of the primer component *per se* or particles of the retainer bearing a liquid primer component - it may be desirable for the device to further comprise a barrier, preferably a mesh or a filter, which restricts the movement of those particles. Such a barrier may be flexible or rigid and may define a compartment within the chamber of the device; pouches made of porous materials such as paper or non-wovens might find utility in this regard. It is noted that such barrier features may also help to prevent non-gaseous forms of either the primer component or the source material from being inadvertently blown out during operation of the device.

Generally, the primer source and any barrier present will occupy only part of the enclosed chamber of the device so that the portion of the chamber unoccupied thereby - the "head-space" of the chamber - becomes filled with gas saturated with the vapour form of the primer component. This primer component vapour/ carrier gas mix is then contactable with the substrate surface to be primed in accordance with the two contacting arrangements discussed herein below.

This carrier gas will typically be air. However, as certain primer components may have sensitivity to air or oxygen, the use of other inert gases or inert gas mixtures in the present devices is not precluded. In this regard, mention may be made of: noble gases; nitrogen (N₂); halogenated hydrocarbons and halogenated carbons, such as CFC-propellants; and, mixtures thereof.

The carrier gas provided to the device may be dried prior to use in the event that the primer component is sensitive to water vapor, for instance to the humidity contained in air. Further, oxygen may be scavenged from the carrier gas provided to the device. Equally, the device itself may further be equipped with one or more of: a drying agent, such as CaCl₂; an oxygen scavenger, such as Cu₂O; a seal which is protective against the ingress of water and / or oxygen; and, one or more valves which can similarly prevent the ingress of air, oxygen or water into the device.

In certain embodiments of the present invention, the device may further comprise a source of the carrier gas. It is recommended that this source of carrier gas is operable so that the pressure of the carrier gas in the head-space above the source of the primer component is fairly low; this can ensure that the vapour pressure of the primer component is relatively high. The skilled operator must be wary of employing too high a pressure of the carrier gas within the head-space such that the vapour pressure of the primer component is detrimentally diminished.

The device of the present invention provides two principle arrangements by which a suitable primer component may contact a substrate surface. The arrangements are not mutually exclusive and a device may be provided with either one or both of said arrangements. Moreover, as both described contacting arrangements entail contact between a primer component in gaseous form and the substrate surface, the spillage of liquid primers can be obviated and there is concomitantly no need to equip production with explosion-proof areas. There will be no corrosive attack of (plastic) substrates since the contacting gas mixture is solvent-free. Other common benefits are reduced odour, since the novel systems are not based on solvents, as well as nearly zero VOC emissions. Still further the devices will be of reduced weight since the mass contribution of solvents is absent.

### i) Dispensing Arrangement

In this arrangement, the device is a dispenser adapted to dispense the primer component onto a surface to be primed. The device will generally comprise an enclosed chamber which allows for the retention of the primer component until dispensing is desired; a conduit from the chamber to a dispensing nozzle is used to dispense the gaseous form of the primer component when force is applied to the contents of the container.

The means by which that propulsive force is applied is not particularly limited. For instance, suitable means of propulsion might include: A squeezable container; a manual pump; a motorized pump; a plunger arrangement; a pressurized propellant; connection to a pressurized gas line; and, combinations thereof.

The squeezable container obviously represents a very simple construction: Squeezing the chamber increases its internal pressure and thereby ejects the carrier gas / primer component vapour mixture from the dispensing nozzle; the release of the (manual) squeezing force causes air to be drawn back through that dispensing nozzle into the head-space of the chamber. A further simple construct of the device is a "pump-up" spray container in which the expulsion pressure on the carrier gas / primer component vapour mixture can be increased by a pumping action prior to expulsion of material. Both of these constructs have the advantage that they made be made of inexpensive and lightweight materials. For the "pump-up" container, this advantage may be weighed against the decreased volatility of the primer source on account of the increased internal pressure of the device, which results in a reduced evaporation rate.

In alternative forms of this dispensing arrangement, a controlled stream of carrier gas may enter the device though a port or other conduit and be passed through the chamber of the device-and thereby over or through the source of the primer component - to dispense the gaseous form of the primer component. The use of an introduced carrier gas in this fashion can lead to greater amounts of primer being picked up as a result of a moving gas stream. Such a gas stream can be generated by a manual or mechanically actuated pump, by connection of the device to a pressurized source of carrier gas or by other means which will be readily apparent to a person of ordinary skill in the art. The device must be sufficiently robust to tolerate the stream of gas passed through it and it is envisaged that a pressurised container containing the source of the primer component may be required in certain circumstance.

To ensure that unwanted solids and liquids do not get dispensed, the dispensing arrangement can be provided with a retaining barrier, such as a mesh, cotton wool, rock wool or the like. This barrier, which may be disposed within the conduit and / or the dispensing nozzle, may act as a filter for the undesired material while not interfering to any substantial extent with the dispensing of gaseous primer component.

The dispensing nozzle, disposed at the distal end of the conduit from the chamber of the device, should provide for the controlled direction of the carrier gas / primer component mixture which egresses from it. The user may, for instance, be able to manipulate the position of the dispensing nozzle based on flexibility provided in the conduit. Alternatively or additionally, the dispensing nozzle may be provided with an adjustable, single or multi-aperture diffusor head.

The dispensing nozzle or the diffusor head should preferably be removable from the conduit, at least in part, to allow it to be cleaned.

In an important aspect of the present invention, the dispensing arrangement enables a method for priming a substrate surface for application of an adhesive composition, said method comprising the steps of dispensing a gaseous form of a primer component onto the surface of a substrate. The gaseous primer component condenses on the substrate surface upon application. This method finds particular utility where the adhesive composition is a curable, cyanoacrylate adhesive composition.

By utilising the device as defined above, the primer component may be dispensed on the surface of the substrate in a controlled manner which, on the one hand allows sufficient application of the primer component and on the other hand prevents overdosing of the primer component. Moreover, no drying time for the applied primer component is required: the time allowed for the solvent to evaporate from traditional forms of primer is substantially reduced or completely eliminated.

### ii) Product Pathway Contacting Arrangement

In this second contacting arrangement, the device is provided with an enclosure in which the surface to be primed may be placed and the primer component in gaseous form is disposed within the enclosure. The enclosure may have a stationary atmosphere including the primer component in gaseous form. Alternatively the primer component may be provided as a moving volume of gas: the movement may be caused by a blower or fan disposed within the chamber or via a continuous or intermittent flow-through gas stream within the chamber.

Where the device of the invention includes a product pathway contacting arrangement of this type, it is nonetheless desirable for the device to also include have a dispensing arrangement as described above; this might be used to dispense the gaseous primer component into the enclosure, for instance.

In a further important aspect of the present invention, the product pathway arrangement of the device enables a method of priming a substrate surface for the application of an adhesive composition, said method comprising the steps of:
i) introducing the substrate surface into a chamber; and,
ii) contacting said substrate surface with a gaseous form of a primer component within said chamber.
This method similarly finds particular utility where the adhesive composition is a curable, cyanoacrylate adhesive composition.

### Further Aspects of the Invention

In a further aspect, the present invention provides a kit comprising;
(i) a curable adhesive composition, preferably a cyanoacrylate adhesive composition; and
(ii) a device as described above having therein the primer component for priming a surface.
By providing such a kit, an end-user has both a curable component and its primer, which allows for quick and reliable use, for example, in the secure fixing of substrates bonded together. In particular, the kits may be used for fast and durable curing of curable cyanoacrylate adhesive compositions and thereby good adhesion on difficult-to-bond surfaces may also be achieved.

In accordance with a yet further aspect of the invention there is provided a method of bonding a first, non-polar substrate to a second substrate, the method comprising the steps of:
i) treating the non-polar substrate(s) with a gaseous primer component;
ii) applying a cyanoacrylate adhesive composition to the first and/or second substrate(s);
iii) optionally applying an activator onto an applied amount of cyanoacrylate adhesive composition; and,
iv) mating the first and second substrates.

In accordance with a still further aspect of the invention, there is provided a method of coating a substrate comprising the steps of:
i) treating a substrate surface with a gaseous primer component;
ii) applying a cyanoacrylate adhesive composition to said substrate surface; and,
iii) optionally applying an activator onto an applied amount of cyanoacrylate adhesive composition.
Step ii) of this method may be repeated, with a decision being made independently after each application to apply an activator thereto. In this way, layers of material can be built up as desired by repeating the application and, optionally, activation. It will be appreciated in this respect that the term "layer" is used to identify separately applied amounts of the curable cyanoacrylate adhesive composition rather than being limited to any particular type of physical arrangement. As such, through selective repetition of the application step ii), this method may be suitable for coating, doming, encapsulation and potting of substrates. Of particular interest within the present invention is the ability to coat or encapsulate fragile objects, such as electronic components, where more robust handling may be desired.

The methods of the present invention can be carried out on an as needed basis or be employed within an industrial process, for example a (continuous) line production process or a batch process.

### Definitions

The words "comprises", "comprising", "having" and "including" are used herein to specify the presence of stated features, integers, steps or components in the present invention but do not preclude the presence or addition of one or more other features, integers, steps, components or groups thereof.

In the present invention "solvent-free" as it pertains to the primer(s), means a primer material or a combination of primer materials, which is not provided in a liquid solution by dissolution in a carrier solvent. This does not preclude the possibility of small or trace amounts of solvent, up to 1 wt.% by weight of the primer material(s), being present in the primer.

The term "particulate material", as it applies to the source of the primer component described herein, is not intended to be particularly limiting and should encompass particles such as free flowing powders, granules, aggregates, clumps, pellets and tablets. The person of ordinary skill in the art will be able to select an appropriate particle size or form based on the device being used. That person will also recognise that certain, specific particulate forms - such as capsules - which may prevent a liquid or solid phase primer component from evaporating or sublimating into the chamber of the device may not be suitable for use herein.

As used herein, "porous" means a characteristic embodied by a material having a non-zero void fraction therein.

As used herein, "vapor pressure" is the pressure of a vapor in thermodynamic equilibrium with its condensed phases in a closed container at a stated temperature.

As used herein the term "cyanoacrylate adhesive composition" denotes a curable adhesive composition comprising at least 10 wt.% of cyanoacrylate monomers, based on the weight of said adhesive composition. Whilst the amount of cyanoacrylate monomer in the cyanoacrylate adhesive composition can be varied to suit a particular application, it will be usual for such compositions to comprise at least 50 wt.%, for example from 75 to 99.99 wt.%.of cyanoacrylate monomers.

Typical cyanoacrylate monomers, which can be used singly or in admixture in the cyanoacrylate adhesive composition, may be represented by the structure: 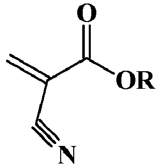 wherein R is selected from alkyl, alkoxyalkyl, cycloalkyl, alkenyl, alkynyl, aralkyl, aryl, allyl and haloalkyl groups each having from 1 to 16 carbon atoms, preferably from 1 to 12 carbon atoms and more preferably 1 to 8 carbon atoms. A preference for R being a C₁-₆ alkyl, C₁₋₆ alkenyl or C₂₋₆ alkoxyalkyl radical might be mentioned. In particular, R is methyl, ethyl, n-butyl, or allyl. And, in a particularly desirable embodiment, the cyanoacrylate adhesive compositions comprise ethyl-2-cyanoacrylate.

Methods for preparing the cyanoacrylate monomer are well known to those skilled in the art, and cyanoacrylate monomers suitable for use in this invention are commercially available from a variety of sources.

Known adjuvants for use in cyanoacrylate adhesive compositions include: stabilizers; accelerators, such as crown ethers, calixarenes, cyclodextrins and oligo- and polyethers; plasticizers; fillers; opacifiers; thickeners; viscosity modifiers; inhibitors; thixotropy conferring agents; dyes; pigments; perfumes; fluorescence markers; thermal degradation reducers; and, adhesion promoters. The amounts and types of such adjuvants will be well known to those skilled in the art.

### Brief Description of the Drawings

The invention will be more clearly understood from the following description of some embodiments thereof, given by way of example only, with reference to the accompanying drawings in which:
Figure 1 is a schematic representation of one embodiment of a dispenser in accordance with the present invention for dispensing primer, in which dispenser is disposed a particulate material which is either itself the primer source or is a material capable of retaining said primer source by adsorption and / or absorption.
Figure 2 is a schematic representation of an alternative dispenser to that of Figure 1, in which embodiment the primer is cast onto the walls of the dispenser;
Figure 3 is a schematic representation of a still further alternative embodiment of the dispenser of the present invention, in which dispenser is disposed a particulate material as per Figure 1 but in which a gas stream is generated by a manual pump;
Figure 4 shows a schematic representation of an alternative device for dispensing primer in which a carrier gas stream is passed through the container, thereby taking up primer vapour;
Figure 5 is an image of either a pressurized container or a pump type dispenser which may be employed in the present invention; and,
Figure 6 illustrates a side view (Figure 6a) and a front view (Figure 6b) of a yet further dispensing device of the present invention, which device may be based on a flexible and elastic container.

### Detailed Description of the Invention

Broadly, the present invention provides a volatile primer component which is disposed within a dispenser in a solid or liquid form. A gas, such as air, which is either present in or otherwise fed into that dispenser, takes up small quantities of the primer component in gaseous form and the resultant primer / carrier gas mixture may then be dispensed onto the substrate to be bonded thereafter.

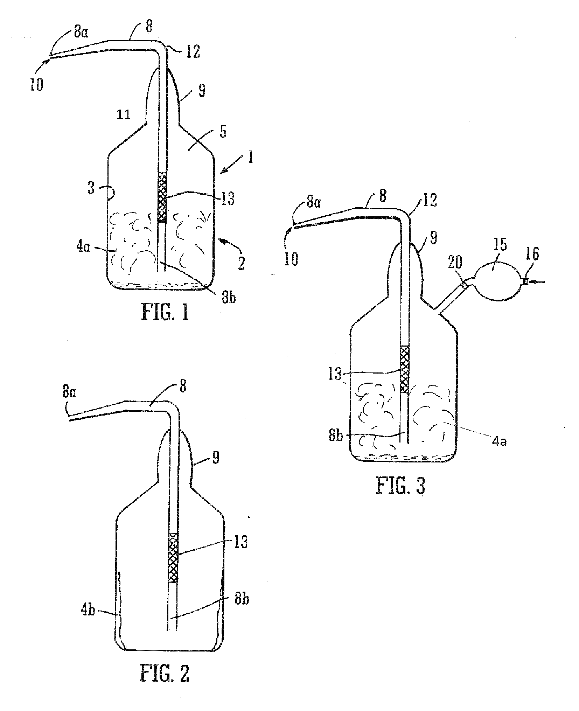

Figure 1 illustrates a first embodiment of the present invention. The dispenser 1 comprises a container 2 - usually constituted by an elastically deformable structure such as a squeezable wash bottle type - having an enclosed chamber 3. The enclosed chamber or reservoir 3 houses an amount of solid, particulate material 4a above which is provided a head-space 5 comprising a suitable gas, such as air.

The form of the particulate material 4a is not particularly limited and may, for instance, be a free flowing powder, an agglomerate, a pellet or a tablet. This particulate material 4a may be itself constituted by a solid, particulate primer component. Alternatively, the particulate material 4a may be constituted by a solid, particulate carrier onto which a liquid primer is adsorbed or into which said liquid primer is absorbed, in the case of porous carriers. In each instance, the primer component is desirably of high volatility and can provide sufficient saturation of the head-space 5 of the enclosed chamber 3. As the head-space 5 of the dispenser 1 accommodates only a certain volume of gas at any given time, this mitigates the risk of overdosing of the primer component directly onto the substrate to be bonded. Desirably, the gas in the head-space 5 of the container 2 will be air but can be any suitable gas as described hereinbefore.

The dispenser 1 further comprises a dispensing arrangement in the form of a nozzle 8 which protrudes from the neck 9 of the container 2 and which has two spaced apart ends 8a and 8b. The nozzle 8 has an outlet 10 at its first end 8a and an elongate body 11. The elongate body extends from the outlet 10 through the neck 9 of the container 2 such that the second end 8b is positioned within the bottle 1 proximate the particulate material 4a. This arrangement allows for gas entering the end 8b of the nozzle 8 to pass over and/or through the particulate material 4a and thereby take up primer vapour.

In the embodiment of Figure 1, the carrier gas / primer mixture is dispensed by manually or mechanically squeezing the container 2. The resultant pressure then forces the mixture along the elongate body 11 of the nozzle 8 and through the outlet 10 at the first end 8a thereof. The nozzle 8 may have a bendable area 12 - analogous to a bendable or flexible drinking straw - such that the angle of the nozzle can be adjusted to control the locus at which the primer component is dispensed. The nozzle 8 is also herein provided with a stop filter or mesh 13 to prevent unwanted material (e.g. liquid or solid primer) from being dispensed.

The embodiment of Figure 2 is identical to that of Figure 1 save for the fact that the primer component 4b is disposed on the internal sidewall of the dispenser 1. This component 4b may be constituted by a coating or casting of a solid primer component onto the sidewall. Equally, this component 4b may be constituted by a coating or casting of a solid material which retains a liquid primer by adsorption and / or absorption. A further alternative is that the solid component 4b may be constituted by a barrier which holds therein either a solid, typically particulate primer or a solid, particulate carrier onto which a liquid primer is adsorbed or into which said liquid primer is absorbed; the barrier can take any suitable form and it too may be shaped to conform to the shape of the container. The primer component(s) may evaporate to form a gaseous primer mix in the head space 5 of the dispenser 1. And, as discussed with regard to Figure 1 above, air or gas which either is present in or is fed into the dispenser 1 takes up small quantities of the primer in gaseous form.

The embodiment of Figure 3 depicts an alternative means of generating dispensing pressure to the act of manually or mechanical squeezing the container 1 as required in the dispensers of Figure 1 and 2. In the embodiment of Figure 3, the gas supplied into the dispenser is pumped by squeezing a squeezable reservoir or bulb 15. The gas from the reservoir 15 enters the headspace 5 and mixes with primer material vapour while moving over or through the primer material or retainer 4a retained in the dispenser 1. Whilst the primer material is shown in Figure 3 as a disintegrated, particulate solid, it will be recognized that the primer material may be provided in the manner illustrated in Figure 2.

As illustrated in Figure 3, the gas which is taken into the reservoir 15 can be contained by a one-way valve 16. A further, optionally one-way, valve 20 may be provided to prevent the gas /primer mixture present in the dispenser 1 from re-entering the bulb 15.

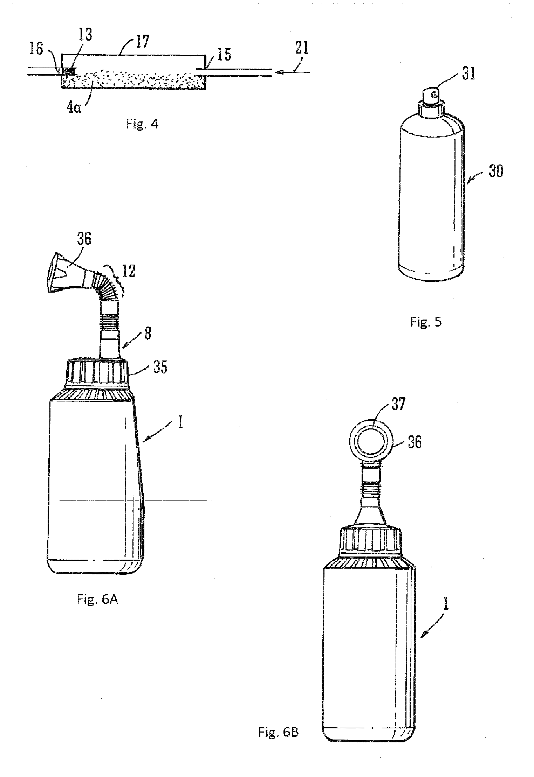

An alternative arrangement dispensing arrangement with an external gas feed is shown in Figure 4 where a gas stream indicated by arrow 21 is passed into a chamber 17 over particulate material 4a which is or comprises the primer. The stream of gas enters through a first port 15, passes over the particulate material 4a and exits through port 16; that exiting gas includes a gaseous form of the primer component. The device includes a filter 13 which prevents the egress of particles. The gas stream 21 is generated from an external source which may optionally be pressurized but may equally be generated by a pump disposed in the exit line 16. The dispensing of the primer component may thereby be controlled by controlling the pressure and rate of flow of the gas stream 21.

Figure 5 shows an image of a pump dispenser 30 of a type which can be utilized to dispense primer through nozzle 31 by pressing upon the button of nozzle 31. This type of arrangement is embodied by either a pressurized bottle or a bottle that can be "pumped up". A manual pump of the dispenser may be actuated until it is primed and/or until a desired level of pressure is achieved, and then used to blow out primer-saturated air (or carrier gas) at that pressure.

Figures 6a and 6b provide different views of a device 1 according to the present invention which is of similar construction to that shown in Figure 1. The device of Figure 6 includes a screw-on cap 35 which allows for the container to be re-filled. The nozzle 8 extends through the cap 35 and may come away with the cap 35. The nozzle 8 is provided with a diffusor head 36 with apertures 37 defined therein in a predetermined pattern. A bendable section 12 - akin to that of flexible drinking straw - is disposed on the device. The device is simply squeezed to eject the primer-saturated carrier gas. After this squeeze action the elasticity of the container allows it to expand and take up ambient air.

The embodiments of Figures 1 to 6 are each characterized in that the primer is dispensed therefrom onto the substrate surface to be primed. The container 2 and, in particular, the head space 5 of the dispensers 1 are sized to generate an atmosphere in the container which has sufficient gas phase primer component to achieve the desired function upon dispensing.

The primer component which is borne by the gas exiting the nozzle 8 of the device condenses upon the substrate surface. The cyanoacrylate adhesive composition should be applied to the primed surface subsequent to the previous priming step. If the application of the adhesive is unduly delayed, the conditioning effect of the primer may be insufficient to realize the full benefits of this invention.

In the case where the substrates to be bonded are both either non-polar or otherwise difficult-to-bond materials, both substrates are treated with primer. If the non-polar substrate is to be bonded to a polar or more active substrate, only the non-polar substrate need be treated with the primer.

As recited above, the present invention also encompasses a contacting arrangement in which the container 2 of the device is dimensioned to accommodate the substrate which is to be primed. In such an arrangement, a second chamber may be provided which is dimensioned to accommodate the substrate and the dispenser is arranged to dispense the gaseous form of the primer into that chamber: generally the dispenser will be external to the chamber but it could be accommodated within the chamber if desired.

Under such circumstances, the primer conditioning time commences when the substrate is disposed within the chamber. Within the conditioning stage, the substrate may be removed from the chamber and disposed appropriately for the application of the cyanoacrylate adhesive compositions thereto.

### Example

The following cyanoacrylate adhesive composition was used in the Example:
Loctite ® 431 commercially available from Henkel Ireland Limited

Lap shears of PE (polyethylene) and PP (polypropylene), were bonded together using said cyanoacrylate adhesive according to standard ASTM No. D3163 (Strength Properties of Adhesively Bonded Rigid Plastic Lap-Shear Joints in Shear by Tension Loading). This standard was followed with and without pre-treatment of the substrates with primer.

A squeezable bottle (wash bottle type, total volume ∼ 260 ml) such as shown in Figure 1, had placed therein about 50 g of 1,2,3-triazole as the primer component. The dispensing nozzle was fitted with a paper filter in order to avoid particles been blown out of nozzle. The bottle was squeezed ten times to apply ten separate jets of air saturated with primer vapor onto both lap-shear surfaces. The surfaces were then bonded with the cyanoacrylate adhesive composition and the Tensile Shear Strength (N/mm²) measured and recorded.

The above experiment was repeated for the further primers indicated in Table 3 below. Where applicable, liquid primers (50g) were absorbed onto paper for inclusion in the squeezable bottle; solid primers (50g) were included in the form of crystals or aggregates.

**Table 3**

| Sample No. | Primer Component | Tensile Shear Strength (N/mm²) | | Remarks |
|---|---|---|---|---|
| | | PE | PP | |
| 1 | None | 0.1 | 0.2 | Control |
| 2 | 1,2,3-triazole | 0.21 | 0.4 | |
| 3 | 1,5-diazabicyclo[4.3.0]non-5-ene; | 2.3 | 0.5 | |
| 4 | 7-methyl-1,5,7-triazabicyclo[4.4.0]dec-5-ene | 0.9 | 0.64 | |
| 5 | *N-t*-butyl-*N,N*-dimethylformamidine | 0.76 | 0.77 | |
| 6 | *N,N,N',N'-*tetramethylethylenediamine | 1.6 | 1.3 | |

It is appreciated that certain features of the invention, which are, for clarity, described in the context of separate embodiments, may also be provided in combination in a single embodiment. Conversely, various features of the invention which are, for brevity, described in the context of a single embodiment, may also be provided separately or in any suitable sub-combination.

## Claims

1. A device for priming a substrate surface, said device comprising:
i) a source for a primer component in gaseous form;
ii) a chamber for holding the gaseous form of the primer component; and at least one of
iii)
a) a dispensing arrangement for dispensing the gaseous form of the primer component from the chamber onto the substrate surface to be primed, said dispensing arrangement comprising a conduit connecting the chamber and the dispensing outlet, and
b) a product pathway for allowing introduction of the substrate to be primed into the chamber so as to prime the surface by contact with the gaseous form of the primer component held within the chamber.

2. The device according to claim 1, wherein the source of the primer component is solvent-free.

3. The device according to claim 1 or claim 2, wherein the source of the primer component is either a volatile solid or liquid.

4. The device according to any one of claims 1 to 3, wherein the source of the primer component is a particulate volatile solid.

5. The device according to any one of claims 1 to 3, wherein the source of the primer component is a volatile solid, cast in a predetermined shape, which shape preferably conforms at least partially to the shape of the chamber.

6. The device according to any one of claims 1 to 3, wherein the source of the primer component is a volatile liquid and the device further comprises a retainer for said liquid, preferably wherein said retainer is adapted to retain the primer component by adsorption and / or absorption.

7. The device according to any one of claims 1 to 6, wherein the source of the primer component is non-flammable.

8. The device according to any one of claims 1 to 7 comprising a barrier, preferably a mesh or filter which retains the source of primer component.

9. The device according to any one of claims 1 to 8 comprising a source of gas for carrying the primer component.

10. The device according to any one of claims 1 to 9 comprising a propulsion means for applying a force to allow application of said primer component, said propulsion means preferably being selected from a squeezable container, a pump, a plunger arrangement, a pressurized propellant or connection to a pressurized gas line.

11. A method for priming a substrate surface for application of an adhesive composition, said method comprising the steps of dispensing a gaseous form of a primer component onto the surface of a substrate.

12. A method of priming a substrate surface for application of an adhesive composition, said method comprising the steps of:
i) introducing the substrate surface into a chamber; and,
ii) contacting said substrate surface with a gaseous form of a primer component within said chamber.

13. A kit comprising;
a) an adhesive composition, preferably a cyanoacrylate adhesive composition; and
b) a device as defined in any one of claims 1 to 10.

14. A method of bonding a first, non-polar substrate to a second substrate, the method comprising the steps of:
a) treating the non-polar substrate(s) with a gaseous primer component;
b) applying a cyanoacrylate adhesive composition to the first and/or second substrate(s);
c) optionally applying an activator onto an applied amount of cyanoacrylate adhesive composition; and,
d) mating the first and second substrates.

15. A method of coating a substrate comprising the steps of:
i) treating a substrate surface with a gaseous primer component;
ii) applying a cyanoacrylate adhesive composition to said substrate surface; and,
iii) optionally applying an activator onto an applied amount of cyanoacrylate adhesive composition.
